# EUROPEAN PATENT APPLICATION

(11) **EP 2 833 087 A1**
(43) Date of publication of application: **04.02.2015**
(21) Application number: 13767611.0
(22) Date of filing: 20.03.2013
(51) Int. Cl.: F25D 11/00, F25D 23/00, F25D 19/00

(54) **DEVICE FOR SUPPLYING STERILIZED COLD AND HOT WATER**

(30) Priority: 30.03.2012 KR 20120033063
(71) Applicant: Wateri Co., Ltd., Seoul 135-090 (KR)
(72) Inventor: YOON, Tae-Ro, Seoul 135-864 (KR)
(74) Representative: Vossius & Partner
(86) International application number: PCT/KR2013/002300
(87) International publication number: WO 2013/147449

(57) **Abstract**

The present invention relates to a device for supplying cold and hot water having a sterilization function by using UV light, and more specifically, to a device for supplying sterilized cold and hot water which includes a UV sterilization lamp and a see-through window for easily checking the contamination state of the inside of a water tank with the naked eye. The device for supplying sterilized cold and hot water according to one embodiment of the present invention is characterized in that the entire top surface or the entire side surface of the water tank is formed as a see-through window such that the internal state thereof can be checked from the outside.

## Description

### TECHNICAL FIELD

The present invention relates to apparatus for supplying cold and hot water having a sterilization function by using UV light, and more specifically, to apparatus for supplying sterilized cold and hot water which includes a UV sterilization lamp and a see-through window for easily checking the contamination state of the inside of a water tank with the naked eye.

### BACKGROUND ART

In general, it is needless to say that safe water quality is important to drinking water. The quality of drinking water is not only a matter of individual taste but also is directly linked with public hygiene; therefore, the quality of drinking water is legally restricted by Law for the Management of Drinking Water.

Microorganism treatment such as sterilization, disinfection and pasteurization etc. is required for managing the quality of drinking water. As method for the microorganism treatment, treatment method using UV light, treatment method using ozone, treatment method using filter, treatment method using electrical discharge, treatment method using hot wind etc. are used.

Meanwhile, Korean Registered Patent No. 10-1093735(hereinafter, referred to as prior art 1) discloses a drinking water supply apparatus having functions of sterilization and pasteurization by supplying of hot wind. The prior art 1 comprises a case; a water withdrawing section which includes a water supply hole for discharging drinking water and wind blowing holes arranged around the water supply hole and which is provided on an upper portion of the case; a ozone generation means which is arranged behind the water withdrawing section and supplies the ozone; a compressor provided in the case; and a wind collection means which collects emitted heat of the compressor and supplies heat wind with the ozone and emitted heat mixed toward the water withdrawing section. Bacteria or contaminating material is sterilized and pasteurized by the use of the heat wind with the emitted heat of the compressor and the ozone generated by the ozone generation means mixed, and the water withdrawing section and the water supply hole are also dried by the heat wind, whereby a good hygiene state of the drinking water supply apparatus is maintained and in addition, the use of waste heat emitted from the compressor allows recycling and save of energy.

Furthermore, Korean Registered Utility Model No. 20-0291101(hereinafter, referred to as prior art 2) discloses an ozone sterilization apparatus for cold and hot water dispenser. The prior art 2 relates to an apparatus for simultaneous sterilization of cold water and hot water which can directly sterilize normal temperature water and cold water by an ozone lamp in the cold and hot water dispenser of the type using a water bottle. For the prior art 2, in the cold and hot water dispenser where in the middle of a cold water tank with an evaporator installed on an outer wall thereof, a separation plate is installed which separates the normal temperature water flowing in from the water bottle and cooled water cooled by evaporation and a hot water tank for inflow of the normal temperature water is connected below the cold water, the ozone lamp is vertically installed passing through one side of the separation plate so that the lamp is simultaneously submerged in both the normal temperature water and the cooled water. Namely, ozone light generated from the ozone lamp simultaneously sterilizes the normal temperature water and the cooled water of the cold water, and if the normal temperature water reaches the hot water tank, the normal temperature water is heated to be secondarily sterilized.

However, the prior arts have a structure where the water storage tank and the cold water tank which are parts contacting with the drinking water and thus directly linked with hygiene are all concealed and thus consumers cannot see the insides of the tanks with the naked eye; therefore, there is a problem that cleanness state of the insides cannot be checked.

### SUMMARY OF THE INVENTION

### Technical problem

The present invention was made in order to solve the above-mentioned problems of the prior arts, and its object is to provide an apparatus for supplying sterilized cold and hot water which includes a UV sterilization lamp for frequently killing all bacteria in a water tank and a see-through window for easily checking the contamination state of the inside of the water tank with the naked eye.

### Solution to the problem

An apparatus for supplying sterilized cold and hot water according to an embodiment of the present invention comprises: a nozzle which is installed on a upper end portion of the case and sprays, into the water tank, the supplied water that has been filtered by the filtration filters; a UV sterilization lamp which is installed on a central portion of upper end of the water tank so that an effect of emission of UV light is provided to the whole of the inside of the water tank; a pressure adjustment pump which is installed between the first filtration filter and the second filtration filter to increase a pressure of the supplied water; a high-level sensor, a medium-level sensor and a low-level sensor which are installed in the water tank to measure the water level and which are operated in association with on/off of the UV sterilization lamp in the water tank; and a cleaning device wherein an ultrasonic oscillator is installed on each of outer surfaces of the water storage tank, the cold water tank and the hot water tank to clean the inside of each of the water tanks, and thereafter cleaning water which has performed cleaning is discharge outward through a cold water discharge valve of a cold water discharge tube connected with a bottom surface of the cold water tank and a hot water discharge valve of a hot water discharge tube connected with a bottom surface of the hot water tank.

Preferably, according to the present invention, the bottom surfaces of the cold water tank and the hot water tank are formed to be sloped and the cold water discharge tube and the hot water discharge tube are connected with a lowermost end portion of the respective bottom surfaces.

### Effect of the invention

The apparatus for supplying sterilized cold and hot water according to an embodiment of the present invention constructed as described above has a following effect.

According to the present invention, since the cleanness state can be frequently checked through the see-through window which allows the inside to be checked, the ultrasonic cleaning device is run, if necessary, to easily clean internal components of the apparatus such as the cold and hot water tank, the connection tube, the water withdrawing hole etc., and thus clean drinking water can be always supplied.

### BRIEF DESCRIPTION OF THE DRAWINGS

Fig.1 is a perspective view of a cold and hot water purifier generally used;
Fig. 2 is an internal structural view a cold and hot water purifier according to a prior art;
Fig. 3 is an internal structural view a cold and hot water purifier according to an embodiment of the present invention; and
Fig. 4 is a partial perspective view of a state where a cover is opened which is disposed on an upper portion of the cold and hot water purifier according to an embodiment of the present invention.

### [Description of Reference Numerals]

10: case
20: water tank
25: water storage tank
30: cold water tank
35: hot water tank
40: UV sterilization lamp
50: spray-type rotary nozzle
60: high-level sensor
61: medium-level sensor
62: low-level sensor
71, 72, 73: ultrasonic oscillator
80: cold water discharge valve
85: hot water discharge valve
90: pressure adjustment pump
95: supplied water control valve
100: see-through window

### BEST MODES FOR CARRYING OUT THE INVENTION

Hereinafter, a preferred embodiment of the present invention will be described in detail with reference to the attached drawings as follows.

This is for the purpose of describing the present invention in such detail that those having ordinary skills in the art can easily carry out the present invention, which does not limit technical concepts and scope of the present invention.

Size or shape etc. of constituent elements illustrated in the drawings may be exaggerated for the sake of clarity and convenience of the description, and terms specially defined considering the construction and operation of the present invention may be varied depending on intentions of users or operators or practice, and definitions of these terms should be interpreted with reference to contents throughout the specification.

The terms "apparatus for supplying cold and hot water" in the present invention collectively refers to apparatus, such as cold and hot water dispenser, cold and hot water purifier and vending machine, which internally has a water tank and supplies cold water and hot water through water withdrawing holes by operations of water supply levers and water supply valves, and the cold and hot water purifier will be described taken as an example for the sake of convenience of the description.

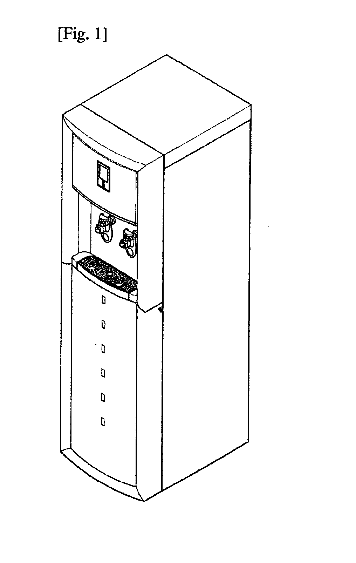

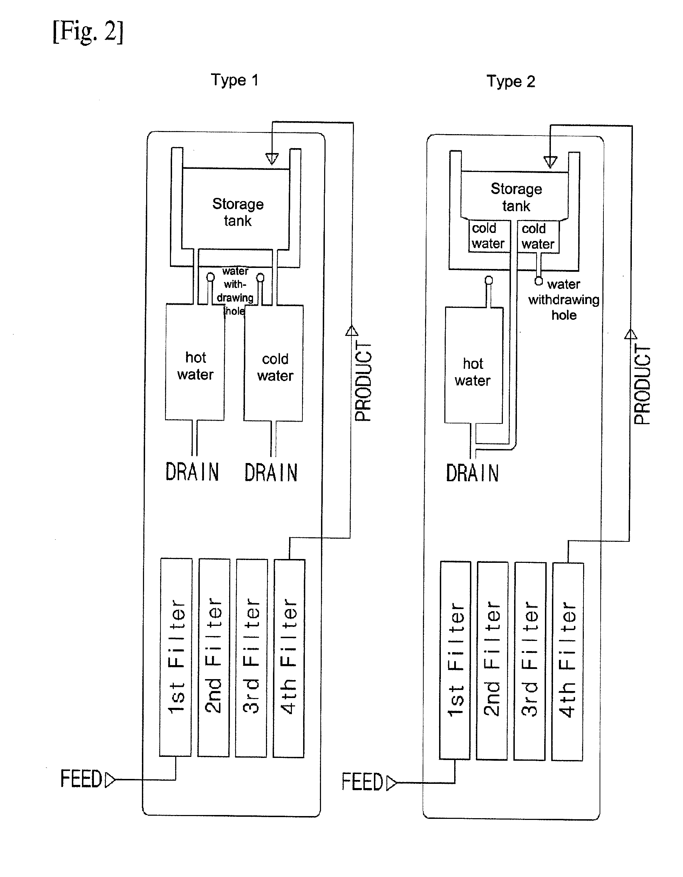

With reference to Figs. 1 and 2, for a general operation manner of a cold/hot water purifier, supplied water is supplied to be purified through various purification methods(method using filtration by filter, method using UV light, method using ozone, method using hot wind or electrical discharge) into purified water, which is then stored in a purified water storage tank, and thereafter the purified water is stored in a cold water storage tank or hot water storage tank, and whenever user presses a water supply lever of the water purifier, the cold water or hot water is provided from the cold/hot water storage tank via a water supply tube through a water tap.

Bacteria created in air layer and water stored in the storage tank of such a cold/hot water purifier, bacteria created between water remaining on a component such as the water supply lever or water supply tube and a support etc. and inflow air etc. is a major cause of deterioration of water quality; therefore, it is necessary to properly treat such bacteria.

A cold/hot water purifier according to an embodiment of the present invention comprises a case (10); a supplied water control valve(95) for controlling inflow of the supplied water; a plurality of filtration filters (91, 92, 93, 94) for filtering the supplied water coming out via the supplied water control valve; an spray-type rotary nozzle (50) installed on an upper end portion of the case; a water tank (20) installed in an upper portion of the case and having a water storage tank (25) and a cold water tank (30) formed integrally with each other; a UV sterilization lamp (40) installed on an inner surface of the water tank (20); a high-level sensor (60), medium-level sensor (61) and low-level sensor (62) each for measuring the water level of the water tank (20); a hot water tank (35) installed in a lower portion of the water tank (20) to store the hot water; ultrasonic cleaning devices (71, 72, 73) installed on outer surfaces of the water storage tank (25), the cold water tank (30) and the hot water tank (35) and capable of cleaning the inside of each of the water tanks (25, 30, 35); a hot water discharge tube (37) connected with a bottom surface of the hot water tank (35); a hot water discharge valve(85) for adjusting water discharge from the hot water discharge tube (37); a cold water discharge tube (32) connected with a bottom surface of the cold water tank (30); and a cold water discharge valve (80) for adjusting water discharge from the cold water discharge tube (32).

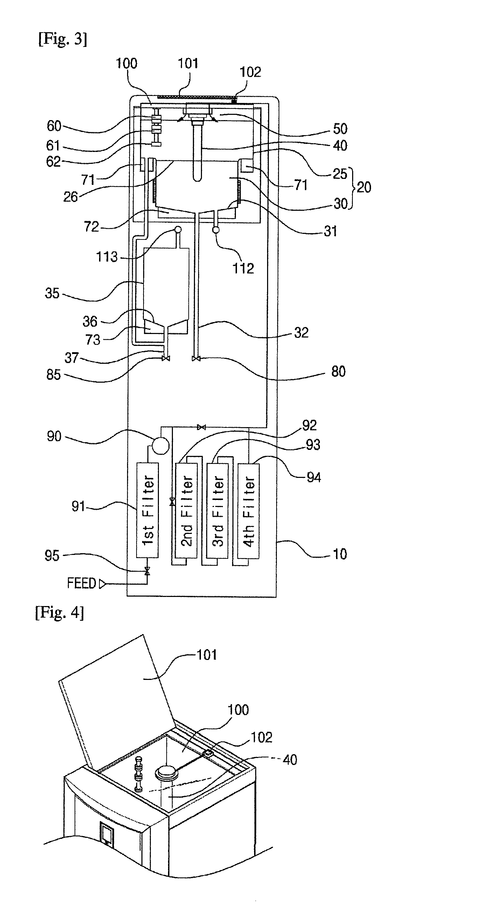

With reference to Fig. 3, coupling view and a construction according to an embodiment of the present invention will be described.

The water tank (20) having the water storage tank (25) and the cold water tank (30) formed integrally with each other is installed in the upper portion of the case (10). Preferably, the cold water tank (30) is installed under the water storage tank (25) while separated therefrom by a partition membrane (26) with a plurality of through holes formed. The UV sterilization lamp (40) is installed in the water tank 20). Preferably, the lamp is installed at a central portion of upper end of the water tank (20) so that the effect of emission of UV light is evenly provided in the water tank (20). The hot water tank (35) is installed below the water tank (20).

Water withdrawing tubes are formed at a lower portions of the cold water tank (30) and an upper portion of the hot water tank (35), which tubes lead to water withdrawing holes (112, 113), respectively. Furthermore, the water discharge tubes (32, 37) for discharging cleaning water are formed at lower portions of the cold water tank (30) and the hot water tank (35), and the water discharge valves (80, 85) are installed on passageway of the water discharge tubes (32, 37).

On outer surface of each of the water tanks (25, 30, 35), the ultrasonic cleaning device is installed which helps to clean the water tanks and each internal component in the apparatus. Preferably, the ultrasonic cleaning device may be composed of ultrasonic oscillators (71, 72, 73).

To control the supplied water, the supplied water control valve (95) is installed at a portion of water supply tube externally connected to the first filtration filter (91).

According to a preferred embodiment of the present invention, a pressure adjustment pump (90) for increasing a pressure applied to the supplied water may be installed between the first filtration filter (91) and the second filtration filter (92).

On the upper end of the case, the spray-type rotary nozzle (50) is internally installed which sprays the supplied water that has passed through the filtration filters (91, 92, 93), and the water sprayed from the spray-type rotary nozzle (50) is stored in each of the water tanks (25, 30, 35). The high-level sensor (60), the medium-level sensor (61) and the low-level sensor (62) each capable of measuring the water level are installed on inner top surface or inner side surface of the water storage tank (25).

Now, operation method of the cold/hot water purifier according to the embodiment of the present invention will be described.

At first, before running of the apparatus, the insides of the water storage tank (25) and the cold water tank (30) are empty without the water. At this time, the UV sterilization lamp (40) is lighted to kill bacteria remaining in the water storage tank (25) and the cold water tank (30). The UV sterilization lamp has a characteristic that the amount of emission of UV light(UV-C, 253.7 nm) effective in sterilization does not reach a peak until the time of about three minutes has elapsed after supplying of power to the lamp. Therefore, the inside of the water storage tank is perfectly sterilized for a period of time(for example, five to six minutes) in which the UV lamp is lighted simultaneously with running of the apparatus and the peak of the effective amount of emission of UV light is reached. Thereafter, the supplied water control valve (95) is opened to allow inflow of drinking water(the supplied water) to be started. The inflow drinking water is sprayed into the water tank (20) through the spray-type rotary nozzle (50), and thin water film is evenly formed and gradually grows from bottom surface of the water tank (20). The thin water film is continuously irradiated with the UV light emitted from the UV sterilization lamp (40), whereby immediate effective sterilization is provided. When the water tank (20) is fully filled with the drinking water and thus the high-level sensor (60) detects that the water level of the water storage tank (25) is a full water level, the supplied water control valve (95) is closed to stop the inflow of water. The UV sterilization lamp (40) is turned off after a further sterilization has been performed for an adequate period of time(for example, two to three minutes). In this way, the supplied water is stored in a sterilized state in the water storage tank (25) and the cold water tank (30).

If the drinking water is withdrawn from the apparatus, the water level in the water storage tank (25) is lowered; if the water level reaches a water level value set for the medium-level sensor (61), the UV sterilization lamp (40) is activated again and, after sterilization process for a pre-set period of time, the supplied water control valve (95) is opened to allow the inflow of water. If the supplied water fills the water storage tank (25) to reach the full water level again, the supply of water is stopped and if the sterilization process for the pre-set period of time is completed, the UV sterilization lamp (40) is turned off. Such operations are repeated.

In a case where the amount of withdrawn water is small or the water is not withdrawn for a long time because of other circumstances such as overseas trip etc. and thus the water level does not reach the medium level, it is possible that the bacteria start to propagate. Therefore, whenever a predetermined time(for example, six, twelve or twenty four hours) has elapsed after final sterilization, re-sterilization is regularly initiated and ended, separately from whether the water level has been detected or not.

Of course, the sterilization may be always manually performed, if necessary.

In this way, the insides of the water storage tank (25) and the cold water tank (30) is repeatedly and effectively sterilized, and the drinking water is always maintained safe from the bacteria.

For the hot water tank, a concern about separate propagation of bacteria does not need to be shown because the hot water tank is always maintained in a state of being heated to a certain temperature.

The inside of the water tank can be viewed through a see-through window (100) which is provided to maintain a cleanness state of internal components. The see-through window (100) is formed by entire upper surface or entire side surface of the water tank (20) which is formed from transparent glass and the like so that the inside of the water tank (20) can be easily viewed. If a cover (101) on the upper surface of the apparatus is opened, a switch (102) is automatically turned on to light a bulb(which can be used as the UV sterilization lamp (40)) which brightens the inside of the water tank (20). The dark inside of the water tank (20) is brightened by light from the bulb and thus can be easily viewed with the naked eye, so that the internal components can be frequently checked for cleanness state.

If the cleanness state of the inside of the water tank (20) is not good, the inside of the water tank (20) is ultrasonic-cleaned by the ultrasonic cleaning devices (71, 72, 73) for an adequate period of time and thereafter the water in the water tank (20) is discharged through the cold water discharge valve (80). The water effectively cleans the water withdrawing holes (112, 113) connected to the water tank (20) by the tubes and every part of the insides of another tubes directly contacting with the drinking water by means of cavitation resulting from ultrasonic waves. At this time, if the water level is not detected by the low-level sensor (62), operation of the ultrasonic cleaning devices are not allowed, for protecting the ultrasonic cleaning devices.

Evaporation process of the supplied water is repeat numerous times in the hot water tank (35) and thus the inside of the hot water tank is seriously contaminated by evaporation residues. Conventionally, the hot water tank (35) is sealed and thus the inside of the hot water tank (35) cannot be cleaned without disassembling of the tank. However, according to the embodiment of the present invention, the separate ultrasonic oscillator (73) is provided to allow the inside of the hot water tank to be easily cleaned without disassembling of the hot water tank. After cleaning of the hot water tank (35), the water in the hot water tank (35) is discharged through the hot water discharge valve(85).

Subsequently, the purified water is sprayed through the spray-type rotary nozzle (50) to rinse the inside of the water tank. Preferably, for properly increasing a pressure of the supplied water, a separate pressure pump (90) is installed to apply an adequate pressure to the water.

Furthermore, for smooth discharge of the water which has performed rinsing, bottom surfaces (31, 36) of the respective water tanks are formed to be sloped and the diameters of cleaning water discharge tubes (32, 37) are made large and a curved surface is made gentle. Such a ultrasonic cleaning process may be carried out manually or automatically by an input program. After cleaning, sterilization and water purifying process are started again. All the control processes described above may be carried out by a separate controller.

As described above, the particular embodiment has been described in the detailed description of the present invention, but various modifications, of course, may be made without departing from the scope of the present invention. Therefore, the scope of the present invention should not be defined by being limited to the described embodiment, but rather should be defined by the claims described below and equivalents thereof.

### Industrial Applicability

As described above, in the apparatus for supplying sterilized cold and hot water according to the embodiment of the present invention, since the contamination state of the UV sterilization lamp and the inside of the water tank can be viewed through the see-through window, the user can frequently check the contamination state of the UV sterilization lamp and the inside of the water tank through the see-through window and thereafter clean them at an appropriate time, whereby the water tank can be always maintained in a clean state.

## Claims

1. A apparatus for supplying sterilized cold and hot water wherein supplied water flowing in from the outside is controlled by a control valve, the supplied waster which has passed through the supplied water control valve is filtered by a plurality of filtration filters comprising a first filtration filter and a second filtration filter, the filtered supplied water is stored in a water tank positioned in a case and having a water storage tank and a cold water tank formed integrally with each other and in a hot water tank connected with one side of the water tank and cold water and hot water are provided through respective water withdrawing holes, the apparatus comprising:
a nozzle which is installed on a upper end portion of the case and sprays, into the water tank, the supplied water that has been filtered by the filtration filters;
a UV sterilization lamp which is installed on a central portion of upper end of the water tank so that an effect of emission of UV light is provided to the whole of the inside of the water tank;
a pressure adjustment pump which is installed between the first filtration filter and the second filtration filter to increase a pressure of the supplied water;
a high-level sensor, a medium-level sensor and a low-level sensor which are installed in the water tank to measure the water level and which are operated in association with on/off of the UV sterilization lamp in the water tank; and
a cleaning device wherein an ultrasonic oscillator is installed on each of outer surfaces of the water storage tank, the cold water tank and the hot water tank to clean the inside of each of the water tanks, and thereafter cleaning water which has performed cleaning is discharged outward through a cold water discharge valve of a cold water discharge tube connected with a bottom surface of the cold water tank and a hot water discharge valve of a hot water discharge tube connected with a bottom surface of the hot water tank.

2. The apparatus for supplying sterilized cold and hot water according to claim 1 wherein the bottom surfaces of the cold water tank and the hot water tank are formed to be sloped and the cold water discharge tube and the hot water discharge tube are connected with a lowermost end portion of the respective bottom surfaces.
